Europäisches Patentamt

(19) European Patent Office

Office européen des brevets

(11) EP 0 887 621 A1

(12) EUROPEAN PATENT APPLICATION
published in accordance with Art. 158(3) EPC

(43) Date of publication:
30.12.1998 Bulletin 1998/53

(51) Int. Cl.$^6$: G01B 11/30, G01N 21/88

(21) Application number: 96906053.2

(86) International application number:
PCT/JP96/00681

(22) Date of filing: 15.03.1996

(87) International publication number:
WO 97/35162 (25.09.1997 Gazette 1997/41)

(84) Designated Contracting States:
DE

(71) Applicants:
• Hitachi, Ltd.
Chiyoda-ku, Tokyo 101 (JP)
• HITACHI TOKYO ELECTRONICS CO., LTD.
Ome-shi Tokyo 198 (JP)

(72) Inventors:
• TAKEDA, Kazuo
Tokyo 189 (JP)

• ISHIDA, Hidetsugu
Tokyo 187 (JP)
• HIRAIWA, Atsushi
Tokyo 189 (JP)
• TAJIMA, Takeshi
Tokyo 190-01 (JP)
• WATASE, Shinichiro
Tokyo 196 (JP)

(74) Representative:
Strehl Schübel-Hopf & Partner
Maximilianstrasse 54
80538 München (DE)

(54) METHOD AND DEVICE FOR MEASURING DEFECT OF CRYSTAL ON CRYSTAL SURFACE

(57) The present invention relates to a method for detecting and measuring crystal defects according to the scattered light from respective crystal defects and allows both size and depth of each of the defects on the entire surface of the sample and with a resolution of a wavelength or under. In the method, two lights (two wavelengths) are applied on a sample for scanning. Each of the two wavelengths of the lights has a penetration depth different three times or over from that of the other. Then, the scattered light from respective defects inside the sample is measured by wavelength thereby to find the size of each of the defects according to the scattered light intensity of the longer wavelength. And, according to the ratio between scattered light intensities, the depth of each defect is found and both depth and size of the defect are displayed in the wafer in-plane distribution of defects. In addition, the observation point of a camera is moved to a specific defect potion detected in the above wide range measurement for scanning thereby to observe each defect pattern with two wavelengths. Thus, both depth and size of each defect are found from the two wavelengths of the scattered light image data of the defect. According to the present invention, therefore, both size and depth of each defect can be measured by observing the defect image through measurement of the entire surface of the sample and through measurement of respective defects when both size and depth must be measured for the defect.

FIG. 1

## Description

Technical Field

The present invention relates to an apparatus for evaluating the crystal of semiconductor wafers, more particularly, to a method and an apparatus for measuring the existing density and the size of crystal defects such as precipitates and stacking faults in a silicon wafer, as well as the depth of each of those precipitates and stacking faults from the surface of the silicon wafer.

Background of the Invention

As the packing density of an LSI (Large Size Integrated circuit) is getting improved more and more, the LSI has also come to be confronted with serious problems that the production yield and reliability are degraded due to defective MOS (Metal Oxide Semiconductor) transistors for composing such the LSI. The most typical factors to cause defective MOS transistors are gate oxide breakdown and excessive leak current from junctions. The latter problem is especially serious, since it further causes an information loss phenomenon referred to as a refreshing failure in DRAM (Dynamic Random Access Memory that requires data holding operations). Many of troubles to occur in those MOS transistors are caused directly or indirectly by crystal defects generated in the subject silicon substrate. How such crystal defects will affect the subject device differs among the existing density and sizes of the crystal defects, as well as the depths of those defects from the surface of the substrate. This is why technologies for measuring those defects are very important.

Technologies used for measuring the above defects and faults are disclosed in some well-known examples as described below. One of those technologies is a method for cleaving an object silicon substrate and applying infrared rays that permeate through the Si crystal in the cross sectional direction of a substrate, then photographing a scattered light image from the fine defects in the Si crystal using a camera. This method is referred to as an IR laser scattering tomography. The method is described in detail in Journal of Crystal Growth Magazine (No.88, page 332, 1988). The existing distribution of defects in a fine region can be known in a measurement of this method, but the sample must be cleaved in this case. In addition, it is a destructive measurement and it takes much time to prepare a sample. In this measuring technology, a beam is applied vertically to the detecting direction, so the depth resolution depends on the daiameter of the irradiation beam. And, the depth resolution is limited almost to the irradiation beam wavelength (about 1 μm).

In the case of the technology disclosed in the official report of Unexamined Published Japanese Patent Application No.5-264468, infrared rays are applied obliquely to a sample thereby to observe the scattered light from defects in the sample using an infrared camera, then measure the depth of each of the defects by making the depth of a scattered light image in each portion correspond to its position in the visual field. The depth resolution in this case is decided by the optical imaging performance (focusing depth). Since the resolution is about a product of wavelength and refractive index, it is 4 μm at largest.

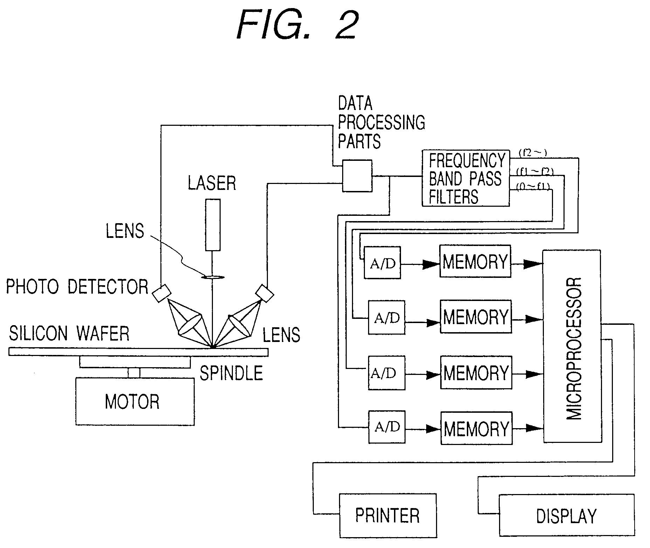

Hereunder, explanation will be made for the related art method for measuring defects on the surface of a semiconductor wafer, disclosed in the official report of Unexamined Published Japanese Patent Application No.6-50902 with reference to Fig.2. At first, a laser beam is applied to the surface of a sample wafer. At this time, the wafer is rotated and the scattered light from the surface of the wafer is collected by a lens and detected by a detector. The measuring apparatus shown in Fig.2 comprises a frequency band dividing circuit for dividing an obtained detected signal into elements in the high frequency band, the intermediate frequency band, and the low frequency band; and plural A/D converters for converting each of the divided defect signals to a digital signal; plural memories for storing each of the digital defect signals in an address corresponding to the detected position of a defect as defect data. Each defect data is processed in data processing parts and printed out by band on a map. The defect data printed out on the map is used to classify defects into types for evaluation. The above method is effective to classify the shape, size, etc. of each defect according to the frequency band of the detected scattered light signal generated like a pulse with respect to the time. In measurements including this measurement intended for checking surface foreign matters, each foreign matter on the surface is generally evaluated by the intensity of one wavelength scattered light. If this principle is applied to an internal defect size evaluation, the evaluation will result in failure, however. Because, the scattered light intensity is attenuated according to the depth of the defect even when in the same size.

The invention disclosed in the official report of Unexamined Published Japanese Patent Application No.2-61540 relates to a defect inspecting apparatus for deciding the position and the size of a foreign matter stuck on a light transmission flat-faced sample (a thin film or a comparatively thin transparent plate, and the like), as well as whether the foreign matter is stuck on the face or the back of the sample. The apparatus applies the first and second light fluxes, each having a different transmittance from the other, then decide whether the foreign matter is stuck on the light incoming surface or on the back surface according to the relationship of the scattered light signal intensity between those light fluxes. This method can decide the surface on which a foreign matter is stuck, but it cannot find the depth of any internal defect.

On the other hand, the invention disclosed in the official report of Unexamined Published Japanese Patent Application No.7-294422 relates to a method for detecting only crystal defects existing between differences of penetration depths of incident lights. A penetration difference is found by subtracting a crystal defect detected by a shallower penetration incident light from a crystal defect detected by a deeper penetration incident light. The incident lights are entered from some light sources, each having a different wavelength from others or a light source that can vary its wavelength continuously. The method makes good use that each of incident lights to silicon changes the penetration depth when its wavelength is varied. The object crystal defects in this case are those existing in a depth between the crystal surface and about 10 $\mu$m from the surface.

However, most of devices used in an LSI are formed in a region at a depth of 0.5 $\mu$m or over from the silicon surface. If any defect is generated in this region, therefore, the subject device often goes down. If a defect is generated in a deeper region, however, it generally causes no trouble in the device. The defect measuring depth resolution should thus be 0.5 $\mu$m or under. In addition, since the seriousness of a device trouble depends on the defect size, size evaluation is indispensable. And, the necessary defect detecting sensitivity for checking the quality of silicon wafers must be possible to detect at least defects generated when a silicon crystal ingot is pulled up. In addition, generally, the distribution of defects inside a wafer is not in uniform, so measurement must be done for the entire surface of each wafer. And, this entire surface measurement must be finished at least within working hours of one day. In order to identify the defect distribution in a wafer, as well as the defect type, it should preferably be possible to observe the pattern of each defect.

Under such the circumstances, it is an object of the present invention to provide a method and an apparatus for measuring crystal defects, which can satisfy the above requirements.

DISCLOSURE OF THE INVENTION

Hereunder, some embodiments of the present invention will be described.

(1) An apparatus for measuring defects, comprising a plurality of light sources, each outputting a light to be absorbed into a sample, said light having a wavelength and a penetration depth different respectively from others or a light source outputting a light having such plural wavelengths concurrently; means for applying each of those lights to a sample at a wavelength; means for scanning a light on the sample or means for scanning a sample on an irradiation light; means for monitoring the scanning position; a detecting system for separating the scattered light generated from the surface of the sample or from internal defects by irradiation wavelength so as to be collected and detected by wavelength using a photo-detector and converting each detected wavelength light to an electrical signal; means for setting a threshold value for the scattered light intensity signal of a specific one-wavelength (trigger signal) selected from plural wavelengths and storing another scattered light intensity and another detected defect position as digital data only when the scattered light intensity signal is detected as a signal whose value is larger than the threshold signal value; a data processing system for finding a defect size using the scattered light intensity of a wavelength whose penetration depth is deeper enough than the penetration depth of the trigger signal wavelength and a light scattering theory (a theory for combining a defect size to a scattered light intensity. For example, theories described in Optical Principles 3 (pages 902 to 971), authored by M. Born and E. Walf, published by Tokai University, 1975 and in Journal Optical Society Of America Vol.67 (pages 561 to 563), authored by Peter Chylek); and means for displaying the measurement result, as well as a method for measuring defects using the apparatus.

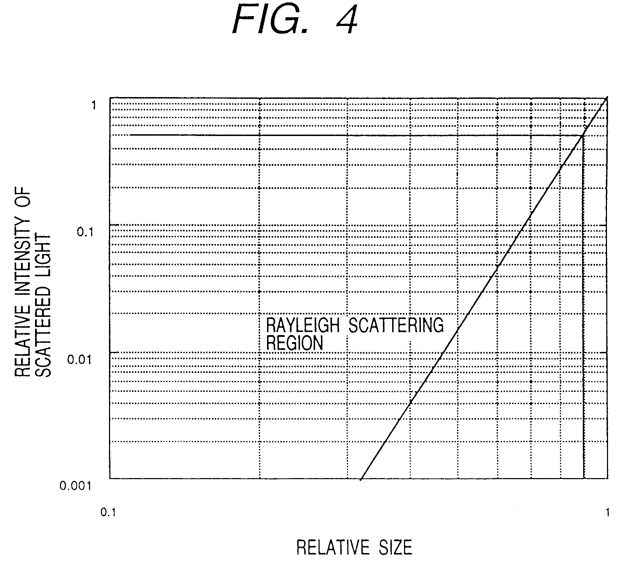

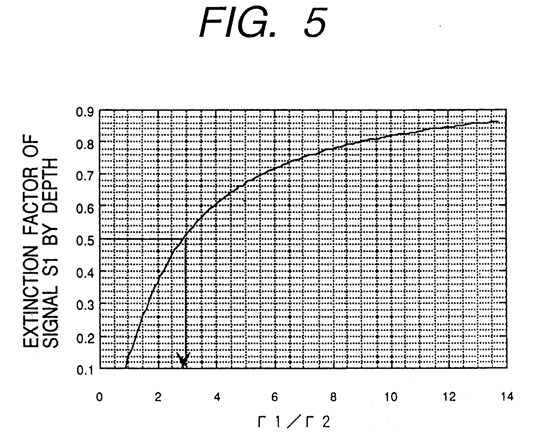

(2) An apparatus for measuring defects, comprising a plurality of light sources, each outputting a light to be absorbed into a sample, said light having a wavelength and a penetration depth different respectively from others or a light source for outputting a light having such plural wavelengths concurrently; means for applying each of those lights to a sample at a wavelength; means for scanning a light on the sample or means for scanning a sample on an irradiation light; means for monitoring the scanning position; a detecting system for separating the scattered light generated from the surface of the sample or from internal defects by irradiation wavelength so as to be collected and detected by wavelength using a photo-detector and converting each detected wavelength light to an electrical signal; means for setting a threshold value for the scattered light intensity signal (trigger signal) of a specific one-wavelength selected from plural wavelengths and storing another scattered light intensity and another detected defect position as digital data only when the scattered light intensity signal is detected as a signal whose value is larger than the value of the threshold signal; a data processing system for finding a defect size using the scattered light intensity of a wavelength whose penetration depth is deeper by n times than the penetration depth of the trigger signal wavelength and the light scattering theory; and means for displaying the measurement result, as well as a method for measuring defects using the apparatus. And, the n value must be at least 3 times or over the ratio of the penetration depths as shown in Fig.4 indicating a graph for the relationship between defect size and scattered light intensity and shown in Fig.5 indicating a graph for attenuation rates decided by penetration depth ratio and scattered light intensity signal depths in order to improve the defect size measuring accuracy to at least 10% or under. The n value is decided by a defect size measuring accuracy assumed such way.

(3) An apparatus for measuring defects, comprising a plurality of light sources, each outputting a light to be absorbed into a sample, said light having a wavelength and a penetration depth different respectively from others or a light source for outputting a light having such plural wavelengths concurrently; means for applying each of those lights to a sample at a wavelength; means for scanning a light on the sample or means for scanning a sample on an irradiation light; means for monitoring the scanning position; a detecting system for separating the scattered light generated from the surface of the sample or from internal defects by irradiation wavelength so as to be collected and detected by wavelength using a photo-detector and converting each detected wavelength light to an electrical signal; means for setting a threshold value for the scattered light intensity signal (trigger signal) of a specific one-wavelength selected from plural wavelengths and storing another scattered light intensity and another detected defect position as digital data only when a signal whose value is larger than the threshold signal value; means for finding the depth Z of each defect using the scattered light intensities of any two wavelengths (S1 and S2) and a relational expression as represented in the expression 5 or 9 to be described later.

(4) An apparatus as defined in (2) or (3) or a method for measuring defects using the apparatus (2) or (3), wherein the apparatus comprises means for shifting an irradiation beam so that a scattered light intensity signal whose penetration depth is shallower is detected earlier than a scattered light intensity signal whose penetration depth is deeper when the irradiation light outputs two wavelengths, each having a penetration depth different at least three times or over from that of the other and fetching the scattered light signals of both wavelengths according to the shallower penetration depth signal detection used as a trigger; means for finding the depth of a defect using the ratio of the scattered light intensities of the two wavelengths; and means for finding a defect size using the scattered light intensity of the deeper penetration depth wavelength, as well as a method for measuring defects using the apparatus. In this method, defects are detected using the shallower penetration depth wavelength as a trigger signal, but the shallower penetration depth wavelength is at the shorter wavelength side in the case of silicon. Since a short wavelength has a larger cross sectional area of the defect scattered light when compared at a same irradiation power density, it has a merit of higher detection sensitivity for defects.

(5) An apparatus as defined in (4) or (5) or a method for measuring defects using the apparatus, wherein the apparatus further includes means for shifting the irradiation beam so that the scattered light intensity signal whose penetration depth is deeper is detected earlier than the scattered light intensity signal whose penetration depth is shallower and fetching the scattered light signals of both wavelengths using the deeper penetration depth wavelength detection as a trigger signal; means for finding the depth of a defect using the ratio between the scattered light intensities of those two wavelengths only for defects for which the shallower penetration depth of a signal intensity goes over a certain value in the subsequent data processing stage; and means for finding a defect size using the deeper penetration depth scattered light intensity. This method uses the deeper penetration depth wavelength as a trigger signal to detect defects and has an advantage that defects in both deep and shallow regions can be detected together.

(6) An apparatus for measuring defects, comprising means for applying a plurality of lights, each having a wavelength and a penetration depth into a sample different at least n times or over from that of others; means for shifting the sample or the irradiation beam so that the irradiation light is applied to any point of the sample; means for photographing defect images obtained by imaging the scattered light from defects by wavelength; and means for finding the depth of each defect using the peak value of each wavelength in the scattered light intensity distribution of the defect images, wherein each defect size is found for defects observed with two different wavelengths selected from a plurality of irradiation wavelengths, each different in penetration depth by n times or over from the other, using the peak value of the scattered light intensity distribution and the above light scattering theory, as well as a method for measuring defects using the apparatus. And, the n value (penetration depth ratio) must be at least 3 times or over the value of the other as shown in Fig.4 indicating a graph for the relationship between defect size and scattered light intensity and shown in Fig.5 indicating a graph for extinction rates decided by penetration depth ratio and scattered light intensity signal depth in order to improve the defect size measuring accuracy to at least 10% or under. The n value is decided by a defect size measuring accuracy assumed such way.

(7) A method and an apparatus obtained by combining (1) and (5) described above.

(8) A method and an apparatus for measuring defects using the method in (1) or (5), then using the method in (6) described above by selecting a defect to be observed specially according to the position data of the detected defect so that the irradiation light is applied to this defect position.

Next, a principle for obtaining a depth resolution and a principle for finding a defect size will be described. If n is defined for the refractive index and k for the extinction index of a wavelength $\lambda$ of a sample substance respectively, a penetration depth $\Gamma$ that assumes the incident light amplitude to be 1/e (e is the bottom of a natural logarithm; e ≒ 2.718) of the surface value will be given as follows.

$$\Gamma = \lambda/2 \pi k \qquad \text{[Expression 1]}$$

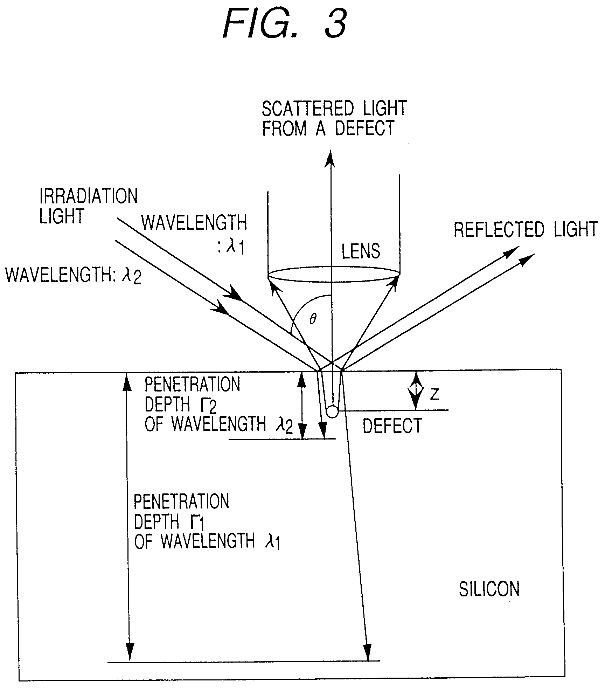

Consequently, in a portion where the intensity of an incident light to the substance from the air at an incident angle $\theta$ is at a depth Z from the surface, the refraction angle in silicon is arcsin (sin $\theta$ /n) . Taking this into consideration, the incident light intensity is attenuated by exp((-2Z/ $\Gamma$)cos(arcsin(sin $\theta$ /n)) from the surface. Then, examination will be made for a case that a light is applied to the surface of the sample from the air at an incident angle $\theta$ as shown in Fig.3 and the light scattered due to a defect in the sample in the direction of the sample surface is detected at a solid angle. And, if $\sigma$ is defined as the integrated scattering cross section of a defect with respect to the detected solid angle, I is defined as the applied light intensity, Ti is defined as the transmittance of the incident light at an incident angle to the wafer surface, and Ts is defined as the transmittance of the scattered light from the defect into the air from inside the wafer, then the intensity S of the scattered light from the defect positioned at a depth Z from the sample surface can be represented as follows taking both attenuation of the incident light and attenuation of the scattered light into consideration.

$$S=Ti\ Ts\ I\ \sigma\ \exp[-(2Z/\Gamma)(1+1/\{\cos(\text{arcsin}\ (\sin\ \theta\ /n))\})] \qquad \text{[Expression 2]}$$

The following expressions are satisfied if n1 and n2 are defined as the refractive indexes for the wavelengths $\lambda$1 and $\lambda$2 of the sample substance, $\Gamma$1 and $\Gamma$2 as penetration depths, I1 and I2 as irradiation light intensities, S1 and S2 as the scattered light intensities to measure, $\sigma$1 and $\sigma$2 as integrated scattering cross sections, Ti1 and Ti2 as irradiation light transmittance, and Ts1 and Ts2 as scattering light transmittance.

$$S1=Ti1\ Ts1\ I1\ \sigma1\ \exp[-(2Z/\Gamma1)(1+1/\{\cos\ (\text{arcsin}(\sin\ \theta/n1))\})] \qquad \text{[Expression 3]}$$

$$S2-Ti2\ Ts2\ I2\ \sigma2\ \exp[-(2Z/\Gamma2)(1+1/\{\cos\ (\text{arcsin}(\sin\ \theta\ /n2))\})] \qquad \text{[Expression 4]}$$

However, $\Gamma$1> $\Gamma$2 must be satisfied. Using the expressions 3 and 4, Z is calculated as follows.

$$Z=C\mathsf{I}\ \ln[C2(S1/S2)(\sigma2/\sigma1)] \qquad \text{[Expression 5]}$$

However, C1 and C2 are determined by apparatus constants and sample's optical constants. They are defined as follows in the expressions 6 and 7.

$$C1=1/[(2/\Gamma2)(1+1/\{\cos(\text{arcsin}(\sin\ \theta/n2))\})\ -(2/\Gamma1)(1+1/\{\cos(\text{arcsin}(\sin\ \theta/n1))\})] \qquad \text{[Expression 6]}$$

$$C2=(I2/I1)\ddagger(Ti2\ Ts2/Ti1\ Ts1) \qquad \text{[Expression 7]}$$

C1 and C2 are apparatus constants, so Z can be found when (S1/S2)($\sigma$1/$\sigma$2) is found.

S1/S2 is a signal intensity ratio and found from a measurand. On the other hand, the $\sigma$1/$\sigma$2 value is found as explained below.

Both $\sigma$1 and $\sigma$2 are found from a defect size using a Mie Scattering Theory (for example, theories described in Optical Principles 3 (pages 902 to 971), authored by M. Born and E. Walf, published by Tokai University, 1975 and in Journal Optical Society Of America Vol.67 (pages 561 to 563), authored by Peter Chylek), so the principles of defect size measurement will be described here. At first, the signal intensity S1 of a defect existing within a penetration depth of $\Gamma$2 detected with a signal intensity S2 will be considered. If $\Gamma$1>>$\Gamma$2 is satisfied, the attenuation factor by depth for this S1 becomes 1, thus it is neglectable. Because, the depth of a defect where the scattered light of a wavelength $\lambda$2 can be detected satisfies a condition of Z<$\Gamma$2. This relationship will be described below quantitatively.

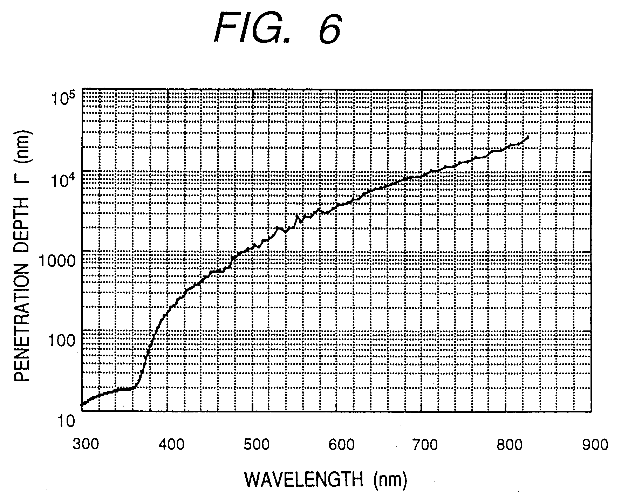

It is considered first how much the signal intensity S1 must be attenuated by depth to measure a defect size within an accuracy of, for example, 10%. In an actual measurement, most of defects are under a defect size of 0.1 um, so a scattering phenomenon caused by a defect can be handled as Rayleigh Scattering which intensity is proportional to the power six of the defect size and the minus power four of the wavelength. Fig.4 indicates the relationship between relative defect size and relative scattered light intensity when the defect size is smaller enough than the wavelength and within a Rayleigh Scattering region. It will thus be found that the scattered light intensity measuring accuracy must be within 50% to assure the defect size measuring accuracy within 10% (in Fig.4, this relationship is indicated by an arrow). Fig.5 shows a condition that the extinction factor by depth must be 50% (that is, an extinction factor of 0.5 or over) for the signal S1 of a defect detected within $\Gamma 2$. Fig.5 is a graph indicating a relation obtained by substituting Z=$\Gamma 2$ for the expression 3. As shown with an arrow in Fig.5, it will be found that $\Gamma 1/\Gamma 2>3$ is just needed to assure the extinction factor over 0.5. Fig.6 is a graph indicating how a penetration depth into silicon depends on a wavelength according to the data described in "Handbook Of Optical Constants Of Solids (pages 547 to 569, published by Academic Press in 1985) edited by Edward D. Patrick. As understood in Fig.6, if wavelengths 532 $\mu$m and 810 $\mu$m are combined for use, the ratio of the penetration depths will become about 10 and this satisfies the above condition. In addition, in the case of Rayleigh, the $\sigma 2/\sigma 1$ value becomes a quantity that is independent of defect sizes. Thus, the quantity just depends on an irradiation wavelength as shown in the following expression.

$$\sigma 2/\sigma 1=(\lambda 1/\lambda 2)4 \qquad \text{[Expression 8]}$$

The above expression is substituted for the expression 5, thereby the expression 5 will become as shown below.

$$[ \ Z=C1 \ 1n(S1/S2)+C0 \qquad \text{Expression 9]}$$

However, C0 becomes an apparatus constant as shown in the following expression.

$$C0=C1 \ 1n[C2(\lambda 1/\lambda 2)4] \qquad \text{[Expression 10]}$$

The defect size d can also be represented as shown below according to the relationship that S1 is proportional to the power six of d.

$$1n(d)=(1/6) \ 1n(S1)+C3 \qquad \text{[Expression 11]}$$

C3 is a function of $\lambda 1$, a detected angle, and an irradiation light intensity, and it is an apparatus constant.

Consequently, a defect depth is measured in accordance with the expression 9 and a defect size is measured in accordance with the expression 11. Thus, Grown-in defects, which are oxygen precipitates included in a non-treated CZ (Czochralski: pulling-up method) silicon wafer, are measured and specific defects among them are checked for sizes using a transmission electron microscope. Then, the signal intensity of each of the defects is corresponded to the defect size thereby to decide an apparatus constant. Once this correspondence is assumed, it is only needed thereafter to detect the relative sensitivity periodically with the signal intensity of the standard defect of polystyrene on the surface.

Brief Description of Drawings

Fig. 1 is a schematic configuration of the first embodiment of the present invention.
Fig.2 is a schematic cross sectional view of a related art technology.
Fig.3 illustrates a principle of a defect detection by light scattering.
Fig.4 illustrates a relationship between relative size and relative intensity of scattered light.
Fig.5 illustrates a relationship between extinction rate by depth and $\Gamma 1/\Gamma 2$ of the signal intensity S1.
Fig.6 illustrates the wavelength dependency of a penetration depth into silicon.
Fig.7 is a measurement example for distribution of in-plane crystal defects within a depth of 0.5 $\mu$m from the surface of a CZ silicon wafer.
Fig.8 illustrates crystal defect size distribution detected in a CZ silicon wafer.
Fig.9 illustrates crystal defect depth distribution in two wafers of 0.1 $\mu$m and 0.3 $\mu$m in epitaxial film thickness respectively.
Fig.10 illustrates an optical system used to apply and detect an almost normal incident light to the surface of each sample wafer.
Fig.11 is another example of the optical system used to apply and detect an almost normal incident light to the surface of each sample wafer.

Best Mode for Carrying Out the Invention

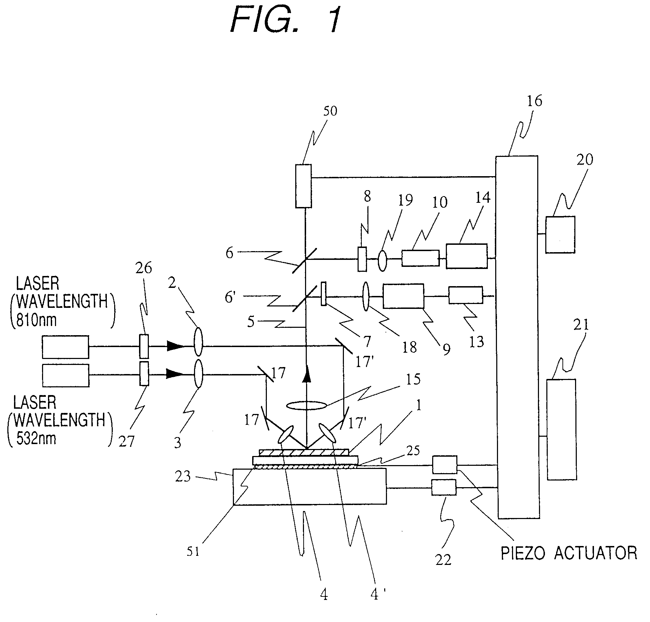

Hereunder, the present invention will be described more in detail with reference to a configuration of an embodiment of the present invention shown in Fig.1. A sample is a silicon wafer. A semiconductor laser beam whose wavelength is 810nm and a secondary harmonic generated light beam of a YAG laser whose wavelength is 532nm are adjusted to a p-polarized beam, respectively, and applied to the surface of the semiconductor wafer using 1/2-wave plates 26 and 27. The beams are then paralleled by lenses 2 and 3 and condensed by lenses 4 and 4'via mirrors 17 and 17'. The beams are then applied to the silicon wafer 1. In this case, while the sample is scanned, the beaming position is shifted by a few times the applied beam size (about 5um) for measurement so that the 532nm wavelength laser beam is applied to defects earlier than the 810nm wavelength laser beam. Defects are detected by both 532nm and 810nm wavelength signals fetched only when the 532nm wavelength scattered light intensity signal (S2) exceeds a preset threshold value (S2Th). The threshold value (S2Th) is preset so that a scattered light intensity variation generated from the surface of the wafer is not detected as a signal.

The laser beam is scanned for crystal in two modes; wide range scanning of wafer scale and micro region (a few hundreds $\mu$m square) scanning. At first, measurement is done in the wide range scanning mode.

When a scattered light is detected during a wide range scanning, crystal defects such as oxygen precipitates (SiO2 grains), dislocation, etc. are detected as light pionts. The scattered light 5 from a defect is condensed by an objective lens 15, then the 810nm and 532nm wavelength lights are separated from the scattered light using wavelength separation filters 6 and 6', as well as filters 7 and 8. The scattered light is again condensed by lenses 18 and 19 and detected by wavelength in the photo detectors 9 and 10. Each of detected signals is amplified in the amplifiers 13 and 14, then converted to a digital signal in the A/D converter so as to be fetched in a computer 16. On the other hand, a rotary stage 23 is scanned in both rotational direction ($\theta$) and in the radial direction (R) from the computer 16 using a driver 22, the coordinates (R, $\theta$) of the rotary encoder attached to a wafer chuck 51 and the a translational encoder are monitored thereby to measure the scattered light. And, when a scattered light is generated from a defect, the coordinates (R, $\theta$) are fetched into the computer 16 together with a scattered light intensity signal.

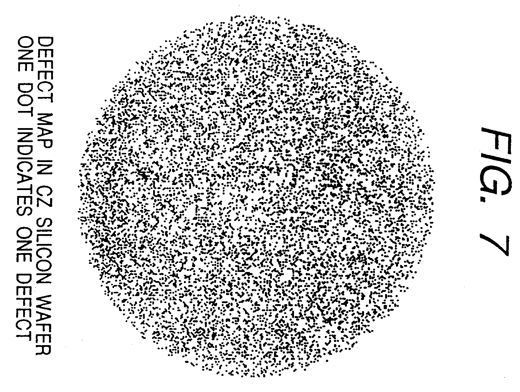

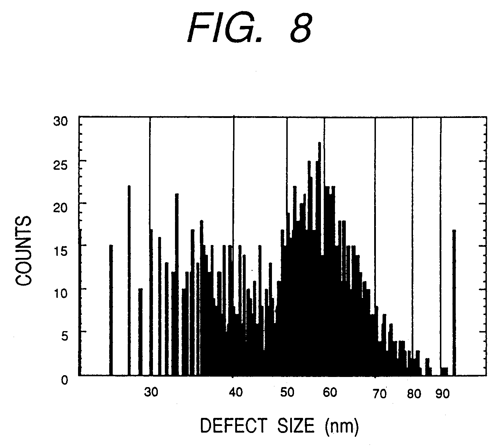

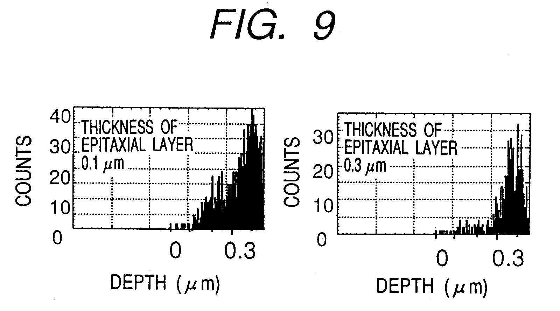

Then, the Grown-in defects included in a non-treated CZ silicon wafer are measured, and the specific defects among them are checked for sizes using a transmission electron microscope thereby to decide an apparatus constant by corresponding the signal intensity of each of the defects and the defect size. Once this correspondence is assumed, it is only needed thereafter that the relative sensitivity is adjusted according to the signal intensity of the standard polystyrene grain on the surface of the wafer periodically. Fig.7 illustrates the result of defect measurement of a non-treated CZ silicon wafer as in-plane distribution of defects within a depth of 0.5um. This defect is referred to as a Grown-in defect. It is already known as oxygen precipitates. Fig.8 illustrates the size distribution of this defect. The horizontal axis indicates ln(d) and C3 on the right side of the expression 11 is decided so that the peak position of the intensity distribution becomes 60nm. In this case, the size 60nm of the Grown-in defect (oxygen precipitates) included in a CZ silicon wafer is known by TEM (Horai, etc., Magazine Semiconductor Silicon (issued in 1994), page 159), so this was referenced. In addition, the apparatus constants C1 and C0 in the expression 9 were decided as follows for deciding a depth of the defect. In other words, defect distribution was checked for a CZ silicon wafer on which silicon was epitaxial-grown at a thickness of 0.3um. Then, it was decided that a position where the depth distribution of Grown-in defects in the CZ silicon substrate was 0.3um, and C1 and C0 were decided assuming a position where the shallowest defect was detected as the surface. Fig.9 indicates a measurement example of wafers of 0.3 $\mu$m and 0.1 $\mu$m in epitaxial-layer thickness. It will be found from this Fig.9 that depth measurement is possible only within a range of 0.5um. The size and depth of each defect are found such way and the result is output onto a display 20 and a printer 21. During a wide range scanning, the height variability of a sample wafer is controlled within a focal depth of the objective lens 15 by a gap sensor (not illustrated) provided around the objective lens 15 and a servo mechanism that uses a piezo-element 25.

Next, a desired defect is selected from the defect map obtained by a measurement in the wide range scanning mode, then the irradiation beam or the sample is moved properly so that the laser beam is irradiated to the position of the selected defect. The scattered light image from the defect is observed by wavelength using a camera 50 and the image data is fetched into the computer 16. In this case, the irradiation beam is about 10 $\mu$m in diameter, so the image data is scanned in steps of about 10 $\mu$m and the image data for each wavelength is read into the computer 16. The defect shape is thus obtained according to both depth and scattered light image from the scattered light intensity of each wavelength.

In the method of an irradiation as described above, the beam irradiation point may be shifted by a few times the beam diameter for measurement so that the 810nm wavelength beam is irradiated to the defect earlier than the 532nm wavelength beam while the sample is scanned. In this case, only when the 810nm wavelength scattered light intensity signal (S1) exceeds a threshold value (S1$_{Th}$), both 532nm and 810nm wavelength signals should be fetched. And in this case, it is only for defects existing within a penetration depth of 532nm wavelength that their depths can be decided. Thus, depth data is found only for data whose 532nm scattered light intensity signal S2 is larger than a threshold value (S2Th2).

In the method of an irradiation as described above, data may be fetched into a computer by irradiating the beam as a oval cross sectional shaped one using a cylindrical lens as the lens 4 for drawing the incident light, detecting the scattered light from the long oval irradiation region using an array detector as a photo detector, and detecting defects in parallel for each array element. In this case, the measuring time can be much saved.

Combinations of irradiation wavelengths, each having a penetration depth ratio different 3 times or over from others, are available for silicon wafer measurement as shown in Fig.6; ($\lambda$1=352nm and $\lambda$2 >380nm), ($\lambda$1-442nm and $\lambda$2 >500nm), ($\lambda$1 =488nm and $\lambda$2 > 580nm),($\lambda$1=515nm and $\lambda$2 >620nm), ($\lambda$1=532nm and $\lambda$2 >650nm), etc. The combination of wavelengths must be varied according to the depth to measure and the type of crystal to measure. The contents of the present invention are not limited to silicon, but other materials (compound semiconductor, metal, organism, etc.) may also be usable. For example, in the case of GaAs crystal, the wavelength may be decided according to the penetration depth of each wavelength for the GaAs crystal. Also in this case, the penetration depth ratio of $\lambda$1 to $\lambda$2 should preferably be 3 or over thereby to select an object wavelength. The wavelength of each of other materials should preferably be decided in the same way.

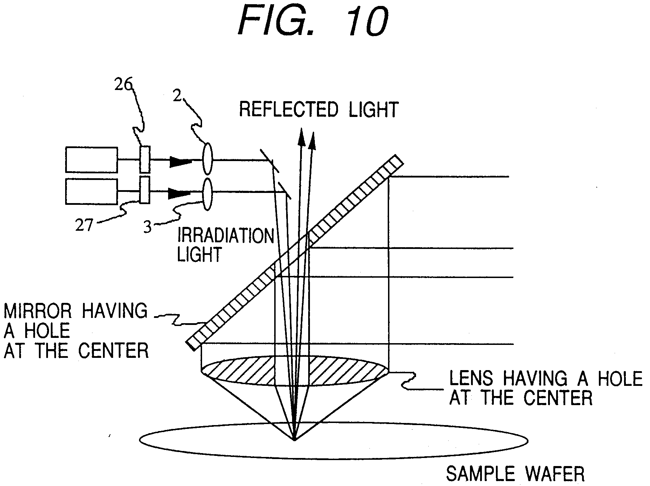

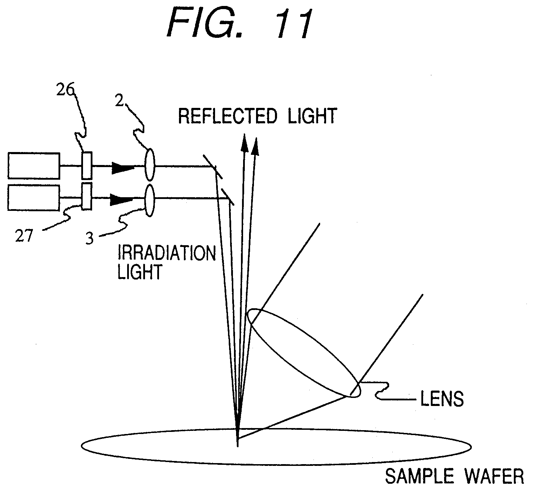

In the case of the above optical system, the incident light angle is 75 degrees. However, the light may also be a normal incident light as shown in the optical system up to a scattered light condensing process in Fig. 10. In this case, the reflected light from the surface of the sample is returned almost vertically. This reflected light becomes an obstacle for measurement of a weak scattered light. In order to suppress detection of this reflected light, therefore, the scattered light is irradiated through a hole made in the scattered light condensing lens and the reflected light is condensed through this hole. After condensing the scattered light, only the scattered light is reflected at a mirror having a hole at the center thereby to change the light path and detect the scattered light by wavelength. In addition, as shown in Fig.11, the scattered light condensing lens may avoid the reflected light.

Industrial Applicability

As described above, according to the present invention, it is possible to measure both size and depth of each of crystal defects in a silicon wafer by observing respective defects and the entire surface of the sample wafer.

**Claims**

1. A method for measuring crystal defects in a sample wafer by irradiating a light on said sample and measuring the scattered light from crystal defects in said sample wafer, wherein

    plural lights (plural wavelengths), each having a different penetration depth into said sample from others, are irradiated on said sample, then said sample or said irradiation lights are scanned relatively thereby to detect the scattered light intensities of plural wavelengths generated from said defects are detected by wavelength, and when a specific wavelength scattered light intensity signal (trigger signal) among plural wavelengths, which is larger than a predetermined value, is detected, the size of said defect is found using the scattered light intensity of the wavelength whose penetration depth is deeper than the wavelength penetration depth of said trigger signal.

2. A method for measuring crystal defects as defined in claim 1, wherein said plural lights (said plural wavelengths) are decided to a rate found according to a necessary defect size measuring accuracy so that the penetration depth rate of each wavelength is satisfied.

3. A method for measuring crystal defects as defined in claim 1, wherein the scattered light intensities of any two wavelengths selected from said plural wavelengths are used to find the depth of each of said defects.

4. A method for measuring crystal defects as defined in claim 2, wherein said plural lights (said plural wavelengths) are two lights (two wavelengths), each having a penetration depth different at least three times or over from that of the other.

5. A method for measuring crystal defects as defined in claim 3, wherein said plural lights (said two wavelengths) are irradiated on said sample and the irradiation beam point is shifted so that the scattered light intensity signal having a wavelength of the shallower penetration depth is detected earlier than the scattered light intensity signal having a wavelength of the deeper penetration depth, and the scattered light intensity signal having the wavelength of shallower penetration depth is used as a trigger signal thereby to fetch scattered light signals of both wavelengths and find a defect size using the scattered light intensity of the deeper penetration depth and find the depth of each defect using the scattered light intensities of two wavelengths.

6. A method for measuring crystal defects as defined in claim 3, wherein said plural lights (said two wavelengths) are irradiated on said sample and the irradiation beam point is shifted so that the scattered light intensity signal having a wavelength of the deeper penetration depth is detected earlier than the scattered light intensity signal having a wavelength of the shallower penetration depth, and the scattered light intensity signal having a wavelength of the deeper penetration depth is used as a trigger signal thereby to fetch scattered light signals of both wavelengths and find a defect size using the scattered light intensity of the deeper penetration depth only for defects for which the signal intensity of the shallower penetration depth goes over a certain value and find the depth of each defect using the scattered light intensities of two wavelengths.

7. A method for measuring crystal defects by irradiating a light on a sample and measuring the scattered light from crystal defects in said sample, wherein

plural lights (plural wavelengths), each having a different penetration depth into said sample from others, is irradiated on said sample, a scattered light image for crystal defects of each wavelength is fetched as image data, and the peak value of the scattered light intensity distribution of the defect image in each wavelength is used to find the depth of each of said defects observed with at least two wavelengths, the peak value of the scattered light intensity distribution of the defect image of the deeper penetration depth is used to find the size of each of said defects.

8. A method for measuring crystal defects as defined in claim 7, wherein said plural lights (said plural wavelengths) are decided to a rate found according to a necessary defect size measuring accuracy so that the penetration depth rate of each wavelength is satisfied.

9. A method for measuring crystal defects as defined in claim 8, wherein said plural lights (said plural wavelengths) are lights (two wavelengths), each having a penetration depth different at least three times from that of the other.

10. A method for detecting said crystal defects by irradiating a light on a sample and measuring the scattered light from crystal defects in said sample, wherein

measuring methods as defined in claims 1 and 7 are used.

11. A method for measuring crystal defects as defined in claim 10, wherein crystal defects in a sample are measured using methods as defined in claims 1 to 6, then a method as defined in claim 7 is used to measure specific defects obtained in the above measurements.

12. An apparatus for measuring crystal defects, comprising

plural light sources emitting plural lights (plural wavelengths) or a light source emitting a light having plural wavelengths concurrently, each being absorbed into a sample and having a different penetration depth from others;
means for irradiating each wavelength light on said sample;
means for scanning an irradiation light on a sample or scanning a sample on said irradiation light;
a detecting system for separating and condensing the scattered light generated from defects on the surface of said sample or inside said sample by irradiation wavelength and detecting said scattered light by wavelength in a photo-detector thereby to convert said wavelength light to an electrical signal;
means for storing both intensity of the scattered light and detected defect position, said scattered light having a wavelength whose penetration depth is deeper than the penetration depth of said trigger signal wavelength, only when a specific one-wavelength scattered light intensity signal (trigger signal) of plural wavelengths is detected as a signal whose value is larger than a predetermined threshold value;
means for finding a defect size using said stored data; and
means for displaying said result.

13. An apparatus for measuring defects as defined in claim 12, wherein said plural lights (plural wavelengths) are decided to a rate found according to a necessary defect size measuring accuracy so that the penetration depth rate of each wavelength is satisfied.

14. An apparatus for measuring defects as defined in claim 12, wherein said apparatus is also provided with means for finding the depth of each of said defects using scattered light intensities of any two wavelengths of said plural wavelengths.

**15.** An apparatus for measuring defects as defined in claim 13, wherein said plural lights (plural wavelengths) are lights (two wavelengths), each having a penetration depth different at least three times or over from that of the other.

**16.** An apparatus for measuring defects as defined in claim 12, wherein means for irradiating each wavelength light on a sample irradiates two-wavelength lights on said sample by shifting the irradiation beam point so that the scattered light intensity signal of the shallower penetration depth wavelength is detected earlier than the scattered light intensity signal of the deeper penetration depth,

means for storing both intensity of the scattered light and detected defect position, said scattered light having a wavelength of the deeper penetration depth than that of said trigger signal wavelength, stores scattered light signals of both wavelengths using the scattered light intensity signal of the shallower penetration depth waveform as a trigger signal only when a specific one-wavelength scattered light intensity signal (trigger signal) of plural wavelengths is detected as a signal whose value is larger than a predetermined threshold value; and

said apparatus is provided with means for finding the depth of each of said defects using the scattered light intensities of said two wavelengths.

**17.** An apparatus for measuring defects as defined in claim 12, wherein means for irradiating each wavelength light on a sample irradiates two lights (two wavelengths) on said sample by shifting the irradiation beam point so that the scattered light intensity signal of the deeper penetration depth wavelength is detected earlier than the scattered light intensity signal of the shallower penetration depth wavelength,

means for storing both intensity of the scattered light and detected defect position, said scattered light having a wavelength of the deeper penetration depth than that of said trigger signal wavelength, stores scattered light signals of both wavelengths using the scattered light intensity signal of the deeper penetration depth waveform as a trigger signal only when a specific one-wavelength scattered light intensity signal (trigger signal) of plural wavelengths is detected as a signal whose value is larger than a predetermined threshold value; and
said apparatus is also provided with means for finding the depth of said defect using the scattered light intensities of said two wavelengths.

**18.** An apparatus for measuring defects, comprising

plural light sources, each emitting a light (a wavelength) being absorbed into a sample and having a different penetration depth from others or a light source emitting such plural lights (such plural wavelengths) concurrently;
means for irradiating each wavelength light on a sample;
means for moving said sample or the irradiation beam so that said irradiation beam is irradiated at any point of said sample;
means for photographing defect images obtained by imaging the scattered light generated from the surface of said sample or from defects inside said sample by irradiation wavelength and fetching respective defect images as image data;
means for finding the depth of each of said defects observed with at least two wavelengths using the peak value of the scattered light intensity distribution of said defect image in each wavelength;
means for finding the size of each of said defects using the peak value of the scattered light intensity distribution of said defect image of the deeper penetration wavelength; and
means for displaying said measurement result.

**19.** An apparatus for measuring defects as defined in claim 18, wherein said plural lights (plural wavelengths) are decided to a rate found according to a necessary defect size measuring accuracy so that the penetration depth rate of each wavelength is satisfied.

**20.** An apparatus for measuring defects as defined in claim 19, wherein said plural lights (plural wavelengths) are light (two wavelengths), each having a penetration depth different at least 3 times or over from that of the other.

## FIG. 1

LASER
(WAVELENGTH 810nm)

LASER
(WAVELENGTH 532nm)

PIEZO ACTUATOR

# FIG. 2

DATA PROCESSING PARTS

LASER

LENS

PHOTO DETECTOR

SILICON WAFER

LENS

SPINDLE

MOTOR

FREQUENCY BAND PASS FILTERS

(f2~)
(f1~f2)
(0~f1)

A/D  MEMORY

A/D  MEMORY

A/D  MEMORY

A/D  MEMORY

MICROPROCESSOR

PRINTER

DISPLAY

# FIG. 3

SCATTERED LIGHT
FROM A DEFECT

IRRADIATION
LIGHT

WAVELENGTH
: $\lambda_1$

REFLECTED LIGHT

WAVELENGTH: $\lambda_2$

LENS

$\theta$

$z$

PENETRATION
DEPTH $\Gamma_2$
OF WAVELENGTH $\lambda_2$

DEFECT

PENETRATION
DEPTH $\Gamma_1$
OF WAVELENGTH $\lambda_1$

SILICON

# FIG. 4

RAYLEIGH SCATTERING REGION

RELATIVE INTENSITY OF SCATTERED LIGHT

RELATIVE SIZE

# FIG. 5

Graph: EXTINCTION FACTOR OF SIGNAL S1 BY DEPTH (y-axis, 0.1 to 0.9) versus $\Gamma 1 / \Gamma 2$ (x-axis, 0 to 14)

# FIG. 6

# FIG. 7

DEFECT MAP IN CZ SILICON WAFER
ONE DOT INDICATES ONE DEFECT

# FIG. 8

# FIG. 9

## FIG. 10

REFLECTED LIGHT

26

2

27

3

IRRADIATION LIGHT

MIRROR HAVING
A HOLE
AT THE CENTER

LENS HAVING A HOLE
AT THE CENTER

SAMPLE WAFER

# FIG. 11

REFLECTED LIGHT

26  2

27  3

IRRADIATION
LIGHT

LENS

SAMPLE WAFER

# INTERNATIONAL SEARCH REPORT

| International application No. |
| --- |
| PCT/JP96/00681 |

| A. | CLASSIFICATION OF SUBJECT MATTER |
| --- | --- |

Int. Cl$^6$  G01B11/30, G01N21/88

According to International Patent Classification (IPC) or to both national classification and IPC

| B. | FIELDS SEARCHED |
| --- | --- |

Minimum documentation searched (classification system followed by classification symbols)

Int. Cl$^6$  G01B11/30, G01N21/88

Documentation searched other than minimum documentation to the extent that such documents are included in the fields searched

| Jitsuyo Shinan Koho | 1971 - 1996 |
| --- | --- |
| Kokai Jitsuyo Shinan Koho | 1971 - 1995 |

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP, 7-294422, A (Mitsubishi Materials Corp.), November 10, 1995 (10. 11. 95)(Family: none) | 1 - 20 |

☐ Further documents are listed in the continuation of Box C.  ☐ See patent family annex.

| * | Special categories of cited documents: |
| --- | --- |
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| June 18, 1996 (18. 06. 96) | June 25, 1996 (25. 06. 96) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

22